(19) Europäisches Patentamt
European Patent Office
Office européen des brevets

(11) **EP 4 451 375 A1**

(12) **EUROPEAN PATENT APPLICATION**
published in accordance with Art. 153(4) EPC

(43) Date of publication:
**23.10.2024 Bulletin 2024/43**

(21) Application number: **22908020.5**

(22) Date of filing: **16.12.2022**

(51) International Patent Classification (IPC):
$H01M\ 4/36$ (2006.01)   $H01M\ 4/38$ (2006.01)
$H01M\ 4/48$ (2010.01)   $H01M\ 10/052$ (2010.01)
$H01M\ 4/02$ (2006.01)

(52) Cooperative Patent Classification (CPC):
H01M 4/02; H01M 4/36; H01M 4/38; H01M 4/48;
H01M 10/052; Y02E 60/10

(86) International application number:
**PCT/KR2022/020634**

(87) International publication number:
**WO 2023/113555 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.12.2021 KR 20210181165**

(71) Applicant: **POSCO Silicon Solution Co., Ltd Sejong-si 30011 (KR)**

(72) Inventors:
• LEE, Jaewoo
  Sejong 30152 (KR)
• CHO, Moonkyu
  Sejong 30011 (KR)
• CHOI, Sunho
  Daejeon 34396 (KR)
• CHEON, Junghoon
  Sejong 30153 (KR)

(74) Representative: **Maiwald GmbH**
**Elisenhof**
**Elisenstraße 3**
**80335 München (DE)**

(54) **ANODE MATERIAL FOR SECONDARY BATTERY**

(57)    The present invention relates to an anode material for a secondary battery. An anode material for a secondary battery includes a matrix containing silicon oxide, a composite oxide of silicon and a doping element selected from one or more groups consisting of alkali metals, alkaline earth metals, and post-transition metals, or mixtures thereof, and silicon nanoparticles dispersed and embedded in the matrix. As the anode material satisfies the crystallographic characteristics based on X-ray diffraction patterning and the residual tensile stress characteristics based on Raman spectroscopic analysis, a secondary battery equipped with the silicon-based anode material has the advantage of not only improving the initial reversible efficiency and having a capacity retention rate at a level that can be practically commercialized, but also effectively suppressing the volume expansion of the anode.

[FIG. 2]

## Description

[Technical Field]

The following disclosure relates to an anode material for a secondary battery, and more particularly, to an anode material for a secondary battery having improved initial reversible efficiency and cycle characteristics.

[Background Art]

Demand for a secondary battery, which may be used for a long time, that is, having a long lifespan as well as high energy density and high power density properties, continues to increase, in various industrial fields such as electronics products, electric/hybrid vehicles, and aerospace/drones.

In general, a secondary battery capable of charging and discharging is formed of a cathode, an anode, an electrolytic material, and a separator, and thereamong, a representative anode material which is included in the anode and commercially used is graphite, but a theoretical maximum capacity of the graphite is only 372 mAh/g.

Thus, in order to implement a secondary battery having high energy density, a study to use chalcogen-based materials such as sulfur (maximum capacity: 1,675 mAh/g), silicon-based materials such as silicon (maximum capacity: 4,200 mAh/g) or a silicon oxide (maximum capacity: 1,500 mAh/g), transition metal oxides, and the like as a secondary battery anode material has been conducted continuously, and among various materials, a silicon-based anode material is receiving the most attention.

However, when particulate silicon is used as an anode material, battery characteristics are rapidly deteriorated by insulation, particle desorption, an increase of contact resistance, and the like due to large volume change of silicon as a charge/discharge cycle is repeated, whereby the function as a battery is already lost at less than 100 cycles, and in the case of a silicon oxide, lithium is lost by irreversible products such as lithium silicate or lithium oxide and initial charge/discharge efficiency is rapidly decreased.

In order to solve the problems of the silicon-based anode material, technologies such as nanosizing silicon into a form of wire or the like and compositing the nano-sized silicon with a carbon material, or doping a silicon oxide with a dissimilar metal to form a composite oxide phase or pre-lithiate the silicon oxide have been suggested, but the initial charge/discharge efficiency, cycle characteristics, high rate characteristics are still poor, so that commercialization is difficult.

[Related Art Document]

[Patent Document]

Korean Patent Laid-Open Publication No. 10-2020-0065514
Korean Patent Laid-Open Publication No. 10-2015-0045336

[Disclosure]

[Technical Problem]

An aspect of the present disclosure is to provide a silicon-based anode material for a secondary battery having improved initial reversible efficiency and stable cycle characteristics.

[Technical Solution]

According to an aspect of the present disclosure, an anode material for a secondary battery includes: a matrix including a silicon oxide, a composite oxide of one or more doping elements selected from the group consisting of alkali metals, alkaline earth metals, and post-transition metals, and silicon, or mixtures thereof; and silicon nanoparticles which are dispersed and embedded in the matrix, wherein a ratio ($A_1/A_2$) between an area of a first peak ($A_1$) and an area of a second peak ($A_2$) is 0.8 to 6, a diffraction angle $2\theta$ being positioned in a range of 10° to 27.4° in the first peak and being positioned in a range of $28\pm0.5°$ in the second peak, in an X-ray diffraction pattern using a CuK$\alpha$ ray; and the number of residual tensile stresses is more than the number of residual compressive stresses, which are defined based on a central wave number of a Raman peak of bulk monocrystalline silicon, when the anode material is analyzed by Raman spectroscopy in 20 random positions, and a difference between a next maximum value and a next minimum value is 15 cm$^{-1}$ or less, the next maximum value and the next minimum value being obtained by selecting only the case of tensile stress in a shift defined in the following Equation 1 and excluding a maximum value and a minimum value:

$$[Equation\ 1]$$

$$Shift = WN(Si) - WN(ref)$$

wherein WN(ref) is a central wave number of a Raman peak of the bulk monocrystalline silicon, and WN(Si) is a central wave number of a Raman peak of nanoparticulate silicon included in the anode material.

In the anode material for a secondary battery according to an exemplary embodiment of the present disclosure, the difference between the next maximum value and the next minimum value in the case of the tensile stress among the shift values defined in Equation 1 may be 11 cm$^{-1}$ or less.

In the anode material for a secondary battery according to an exemplary embodiment of the present disclosure, a ratio (C/T) between the number of the residual compressive stresses (C) and the number of the residual tensile stresses (T) may be 0.5 or less.

In the anode material for a secondary battery according to an exemplary embodiment of the present disclosure, a ratio ($L_1/L_2$) between a full width at half maximum (FWHM) of the first peak ($L_1$) and a FWHM of the second peak ($L_2$) in the X-ray diffraction pattern may be 6 to 15.

In the anode material for a secondary battery according to an exemplary embodiment of the present disclosure, an intensity ratio ($I_1/I_2$) between a maximum intensity of the first peak ($I_1$) and a maximum intensity of the second peak ($I_2$) may be 0.05 to 1.25.

In the anode material for a secondary battery according to an exemplary embodiment of the present disclosure, the first peak may be derived from an amorphous silicon oxide, and the second peak may be derived from crystalline silicon.

In the anode material for a secondary battery according to an exemplary embodiment of the present disclosure, the FWHM of the Raman peak of the nanoparticulate silicon included in the anode material may be larger than the FWHM of the Raman peak of the bulk monocrystalline silicon.

In the anode material for a secondary battery according to an exemplary embodiment of the present disclosure, the FWHM of the Raman peak of the nanoparticulate silicon included in the anode material may be 4 to 20 cm$^{-1}$.

In the anode material for a secondary battery according to an exemplary embodiment of the present disclosure, a plurality of anode material particles may be included, and the particles may have composition uniformity between particles according to the following Equation 2:

$$[Equation\ 2]$$

$$1.3 \leq UF(D)$$

wherein UF(D) is a value obtained by dividing an average doping element composition between anode material particles by a standard deviation of a doping element composition, based on wt% composition.

In the anode material for a secondary battery according to an exemplary embodiment of the present disclosure, the silicon nanoparticles may have an average diameter of 2 to 30 nm.

In the anode material for a secondary battery according to an exemplary embodiment of the present disclosure, the doping element may be one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi) .

In the anode material for a secondary battery according to an exemplary embodiment of the present disclosure, the anode material may be in a particle form having an average diameter (D50) by volume of 1 to 50 $\mu$m.

In the anode material for a secondary battery according to an exemplary embodiment of the present disclosure, the anode material may further include a coating layer containing carbon.

According to another aspect of the present disclosure, a secondary battery includes the anode material for a secondary battery described above.

[Advantageous Effects]

The anode material for a secondary battery according to the present disclosure includes a matrix including a silicon oxide, a composite oxide of one or more doping elements selected from the group consisting of alkali metals, alkaline earth metals, and post-transition metals, and silicon or mixtures thereof, and silicon nanoparticles which are dispersed and embedded in the matrix, may satisfy the crystallographic characteristics based on an X-ray diffraction pattern and residual tensile stress characteristics based on Raman spectroscopic analysis to effectively suppress expansion of the anode material described above, and may improve initial reversible efficiency of a secondary battery equipped with a silicon-based anode material and also have a capacity retention rate to allow actual commercialization.

[Description of Drawings]

FIG. 1 is a drawing illustrating an X-ray diffraction (XRD) pattern of an anode material produced according to an exemplary embodiment of the present disclosure.
FIG. 2 is a drawing illustrating a measured Raman spectrum of the anode material produced according to an exemplary embodiment of the present disclosure.

[Best Mode for Invention]

Hereinafter, the anode material for a secondary battery of the present disclosure will be described in detail with reference to the accompanying drawing. The drawings to be provided below are provided by way of example so that the spirit of the present disclosure may be sufficiently conveyed to a person skilled in the art. Therefore, the present disclosure is not limited to the drawings provided below but may be embodied in many different forms, and the drawings suggested below may be exaggerated in order to clarify the spirit of the present disclosure. Technical terms and scientific terms used herein have the general meaning commonly understood by a person skilled in the art to which the present disclosure pertains unless otherwise defined, and description for the known function and configuration which may unnecessarily obscure the gist of the present disclosure will be omitted in the following description and the accompanying drawings.
In addition, the singular form used in the specification and claims appended thereto may be intended to include a plural form also, unless otherwise indicated in the context.
In the present specification and the appended claims, the terms such as "first" and "second" are not used in a limited meaning but are used for the purpose of distinguishing one constituent element from other constituent elements.
In the present specification and the appended claims, the terms such as "comprise" or "have" mean that there is a characteristic or a constitutional element described in the specification, and as long as it is not particularly limited, a possibility of adding one or more other characteristics or constitutional elements is not excluded in advance.
In the present specification and the appended claims, when a portion such as a membrane (layer), an area, and a constituent element is present on another portion, not only a case in which the portion is in contact with and directly on another portion but also a case in which other membranes (layers), other areas, other constitutional elements, and the like are interposed between the portions is included.
The present applicant found that in a silicon-based anode material composited with silicon and a silicon-based oxide, the electrochemical properties of the anode material are significantly affected by the residual stress of silicon included in the anode material. As a result of in-depth study based on the finding, it was found that when nanoparticulate silicon is dispersed in a silicon-based oxide-based matrix, the number of residual tensile stresses is more than the number of residual compressive stresses, and also the uniformity of the residual stress is better, the electrochemical properties of the anode material are significantly improved, thereby completing the present disclosure.
Thus, since the anode material according to the present disclosure based on the finding described above shows electrochemical properties which may not be obtained from a conventional silicon-based anode material, by a combination of silicon having more residual tensile stress which is dispersed in a nanoparticle form and has excellent uniformity, and the matrix, the present disclosure includes various embodiments based on the physical properties of the silicon-based anode material according to the present disclosure.
In the present disclosure, the matrix may refer to a solid medium in which nanoparticulate silicon is dispersed, and may refer to a material forming a continuum as compared with silicon nanoparticles which are a dispersed phase in the anode material. In the present disclosure, the matrix may refer to material (s) other than metal silicon (Si) in the anode material.
In the present disclosure, the nanoparticles may refer to particles in the order of $10^0$ nm to $10^2$ nm having a size (diameter) usually defined as nanoparticles, substantially having a diameter of 500 nm or less, specifically 200 nm or less, more specifically 100 nm or less, and more specifically 50 nm or less.
In the present disclosure, the anode material for a secondary battery includes an anode material for a lithium secondary battery, but is not necessarily limited thereto. The anode material of the present disclosure may be used as an active material of a secondary battery such as a sodium battery, an aluminum battery, a magnesium battery, a calcium battery, and a zinc battery, and may also be used in other conventional energy storage/production devices using a silicon-based material, such as a super capacitor, a dye-sensitized solar cell, and a fuel cell.

The anode material for a secondary battery according to the present disclosure includes: a matrix including a silicon oxide, a composite oxide of one or more doping elements selected from the group consisting of alkali metals, alkaline earth metals, and post-transition metals, and silicon, or mixtures thereof; and silicon nanoparticles which are dispersed and embedded in the matrix, wherein a ratio ($A_1/A_2$) between an area of a first peak ($A_1$) and an area of a second peak ($A_2$) is 0.8 to 6, a diffraction angle $2\theta$ being positioned in a range of 10° to 27.4° in the first peak and being positioned in a range of $28\pm0.5°$ in the second peak, in an X-ray diffraction pattern using a CuK$\alpha$ ray; and the number of residual tensile stresses is more than the number of residual compressive stresses, which are defined based on a central wave number of a Raman peak of bulk monocrystalline silicon, when the anode material is analyzed by Raman spectroscopy in 20 random positions, and a difference between a next maximum value and a next minimum value satisfies 15 cm$^{-1}$ or less, the next maximum value and the next minimum value being obtained by selecting only the case of tensile stress in a shift defined in the following Equation 1 and excluding a maximum value and a minimum value:

[Equation 1]

$$\text{Shift} = \text{WN(Si)} - \text{WN(ref)}$$

wherein WN(ref) is a central wave number of a Raman peak of the bulk monocrystalline silicon, and WN(Si) is a central wave number of a Raman peak of nanoparticulate silicon included in the anode material.

Though the conventional secondary battery including a silicon-based anode material has a theoretical capacity of up to 4,200 mAh/g, it has a limitation in practical use due to a demerit of significantly reduced cycle characteristics by a phenomenon in which a volume change of about 300% or more during charging is caused to desorb the anode material from a current collector.

However, the anode material for a secondary battery according to the present disclosure includes a matrix including a silicon oxide, a composite oxide of one or more doping elements selected from the group consisting of alkali metals, alkaline earth metals, and a post-transition metals, and silicon or mixtures thereof, and silicon nanoparticles which are dispersed and embedded in the matrix, may satisfy the crystallographic characteristics based on an X-ray diffraction pattern and residual tensile stress characteristics based on Raman spectroscopic analysis to effectively suppress volume expansion of an electrode, and may improve initial reversible efficiency of a secondary battery equipped with a silicon-based anode material and also have a capacity retention rate to allow actual commercialization.

A ratio (WN(ref)/WN(Si)) between a central wave number (Wn(ref)) of a Raman peak of bulk monocrystalline silicon and a central wave number (WN(Si)) of a Raman peak of nanoparticulate silicon included in the anode material in the Raman spectrum obtained by Raman spectroscopic analysis of the anode material which is specifically described above may be used as a parameter which indicates the type of stress remaining (residual stress) on silicon nanoparticles which are dispersed and embedded in a matrix and the size of residual stress.

More specifically, when WN(ref)/WN(Si) is more than 1 based on the central wave number of the Raman peak of bulk monocrystalline silicon, it means that nanoparticulate silicon has residual tensile stress, and when WN(ref)/WN(Si) is less than 1, it means that the nanoparticulate silicon has residual compressive stress.

Herein, the term bulk monocrystalline silicon should be interpreted as being substantially silicon having a size showing the physical properties of bulk monocrystalline silicon, and in terms of suggesting clear comparison criteria and ensuring ease of purchase, the bulk monocrystalline silicon may have a thickness in the order of sub-millimeters (sub mm order), and as a specific example, may refer to a monocrystalline silicon wafer having a thickness of 0.4 to 0.7 mm.

In addition, the Raman peak of silicon in each of the bulk monocrystalline silicon and the nanoparticulate silicon may refer to the Raman peak positioned in a region of 400 to 560 cm$^{-1}$, specifically in a region of 450 to 540 cm$^{-1}$, and more specifically in a region of 490 to 530 cm$^{-1}$ in the Raman spectrum of silicon.

The central wave number of the peak, that is, the wave number corresponding to the center of the peak, may refer to a wave number having a maximum intensity value in the peak. Herein, when there are two or more Raman peaks in the Raman shift region described above, a peak having the highest intensity may correspond to the Raman peak of silicon, and when two or more Raman peaks overlap each other to show a double rod shape, a wave number having a maximum intensity value in a rod having a higher intensity of the two rods may correspond to the central wave number of the peak.

The full width at half maximum (FWHM) of the Raman peak of nanoparticulate silicon included in the anode material may be larger than the FWHM of the Raman peak of bulk monocrystalline silicon. The FWHM value larger than that of the bulk monocrystalline silicon may be due to a structure in which silicon included in the anode material is dispersed and embedded in the matrix in an extremely fine particle form.

Specifically, the FWHM of the Ramak peak of the nanoparticulate silicon included in the anode material may be 4 to 20 cm$^{-1}$, 6 to 20 cm$^{-1}$, 6 to 18 cm$^{-1}$, 6 to 16 cm$^{-1}$, 8 to 20 cm$^{-1}$, 8 to 18 cm$^{-1}$, 8 to 16 cm$^{-1}$, 10 to 20 cm$^{-1}$, 10 to

18 cm$^{-1}$, or 10 to 16 cm$^{-1}$. Herein, the Raman peak of the nanoparticulate silicon included in the anode material may refer to a single peak, not a deconvoluted peak.

In an exemplary embodiment, when the anode material is analyzed by Raman spectroscopy in 20 random positions, the number of residual tensile stresses more than the number of residual compressive stresses is included in the nanoparticulate silicon, as defined based on the central wave number of the Raman peak of bulk monocrystalline silicon.

As a specific example, a ratio (C/T) of the number of residual compressive stresses (C) and the number of residual tensile stresses (T) included in the nanoparticulate silicon may be 0.5 or less, 0.4 or less, 0.3 or less, 0.2 or less, or 0.1 or less, and may be substantially 0 or more, and more substantially 0.01 or more.

As a specific example, C/T may be 0 to 0.5, 0 to 0.4, 0 to 0.3, 0 to 0.2, 0 to 0.1, 0.01 to 0.5, 0.01 to 0.4, 0.01 to 0.3, 0.01 to 0.2, or 0.01 to 0.1.

In addition, a difference between a next maximum value and a next minimum value satisfies 15 cm$^{-1}$ or less, the next maximum value and the next minimum value being obtained by selecting only the case of tensile stress in a shift defined in the following Equation 1 and excluding a maximum value and a minimum value:

$$[\text{Equation 1}]$$

$$\text{Shift} = \text{WN(Si)} - \text{WN(ref)}$$

wherein WN (ref) is a central wave number of a Raman peak of bulk monocrystalline silicon, and WN(Si) is a central wave number of a Raman peak of nanoparticulate silicon included in the anode material.

A shift value may have a positive value or a negative value depending on the type of residual stress included in the nanoparticulate silicon in the shift defined by Equation 1, the difference between the next maximum value and the next minimum value which are obtained by selecting only the case of tensile stress in the shift and excluding the maximum value and the minimum value may be used as an indicator showing residual tensile stress uniformity of silicon nanoparticles which are dispersed and embedded in the anode material.

As a specific example, the difference between the next maximum value and the next minimum value which are obtained by selecting only the case of tensile stress in the shift defined by Equation 1 and excluding the maximum value and the minimum value may be 15 cm$^{-1}$ or less, 14 cm$^{-1}$ or less, 13 cm$^{-1}$ or less, 12 cm$^{-1}$ or less, 11 cm$^{-1}$ or less, 10 cm$^{-1}$ or less, 9 cm$^{-1}$ or less, or 5 cm$^{-1}$ or less, and unlimitedly, may be 0 cm$^{-1}$ or more, 0.1 cm$^{-1}$ or more, and more substantially 1 cm$^{-1}$ or more. More specifically, the difference between the next maximum value and the next minimum value may be 0 to 15 cm$^{-1}$, 0 to 11 cm$^{-1}$, 0 to 10 cm$^{-1}$, 0.1 to 11 cm$^{-1}$, 0.1 to 10 cm$^{-1}$, 1 to 11 cm$^{-1}$, 1 to 10 cm$^{-1}$, 0.1 to 9 cm$^{-1}$, 1 to 9 cm$^{-1}$, 0.1 to 5 cm$^{-1}$, or 1 to 5 cm$^{-1}$.

The difference between the next maximum value and the next minimum value which are obtained by selecting only the case of tensile stress in the shift defined by Equation 1 described above and excluding the maximum value and the minimum value may mean that the size of residual stress of silicon nanoparticles which are dispersed and embedded in the anode material is shown to be uniform.

Herein, the difference between the next maximum value and the next minimum value of tensile stress satisfying the range described above is the difference between the next maximum value and the next minimum value excluding the maximum value and the minimum value from the shift values of residual tensile stress excluding the tensile compressive stress in the shift defined by Equation 1, and may mean that the size of tensile stress remaining on the silicon nanoparticles is substantially the same.

As such, since the anode material for a secondary battery according to an exemplary embodiment of the present disclosure satisfies the characteristics of the residual tensile stress based on the Raman spectroscopic analysis described above, the volume expansion of an electrode may be effectively suppressed, and also, the capacity retention rate characteristics of a secondary battery equipped with a silicon-based anode material may be significantly improved.

As an exemplary embodiment, an expansion rate of an anode including the anode material may be 55% or less, specifically 54% or less, 53% or less, 52% or less, 51% or less, 50% or less, or 45% or less, and though its lower limit is not limited, may be substantially 10% or more.

Herein, the expansion rate of the anode may refer to an expansion rate of an anode active material layer after performing a charge/discharge cycle in which a half battery including an anode including an anode active material layer including the anode material described above and metal lithium as a counter electrode is charged (lithiated) to 0.005 V at a constant current of 0.5 C, charged to 0.005 V at a constant voltage of 0.005 V until reaching 0.005 C, and then discharged (de-lithiated) to 1.5 V at a constant current of 0.5 C, 50 times.

Specifically, the anode expansion rate may be defined as (thickness of anode active material layer after charging - thickness of anode active material layer before charging) / (thickness of anode active material before charging) $\times$ 100 for an anode active material layer obtained by disassembling a battery in a fully charge state to SOC (state of charge) 100% after 50 charge/discharge cycles, and the thickness of the anode active material before charging may be a thickness of the anode active material layer included in a dried anode before battery assembly.

The half battery may be a cell including an anode including an anode current collector and an anode active material layer which is disposed on at least one surface of the current collector and includes the anode material according to an exemplary embodiment of the present disclosure; a counter electrode which is a metal lithium foil; a separator interposed between the anode and the counter electrode; and an electrolyte in which $LiPF_6$ is dissolved at a concentration of 1 M in a mixed solvent of ethylene carbonate and ethyl methyl carbonate at a volume ratio of 1:1.

As a specific example, the anode active material layer including the anode material may further include a carbon-based anode active material.

The carbon-based anode active material may be any one or more selected from artificial graphite, natural graphite, hard carbon, graphene, and carbon nanotubes, but the present disclosure is not limited thereto.

As an example, a weight ratio of the anode material to the carbon-based anode active material included in the anode material may be 1:99 to 99:1, specifically 5:95 to 95:5, more specifically 5:95 to 50:50, and still more specifically 5:95 to 20:80.

In an exemplary embodiment, a ratio ($A_1/A_2$) between an area of a first peak ($A_1$) in which a diffraction angle $2\theta$ is positioned in a range of 10° to 27.4° and an area of a second peak ($A_2$) in which a diffraction angle $2\theta$ is positioned in a range of $28 \pm 0.5°$ in the X-ray diffraction pattern of the anode material using a CuK$\alpha$ ray may be 0.8 to 8, specifically 0.8 to 6, and more specifically 0.8 to 5.5.

Herein, the area of each peak in the X-ray diffraction pattern refers to an integral area occupied by each peak. Herein, the integral area may be an integral area after fitting the peak from which a noise level has been removed, using a Gaussian function and/or a Lorentz function, but when the areas of the first peak and the second peak described above may be derived by the same method, the method of deriving the area of an XRD peak known in the art may be used without limitation.

As a specific example, noise levels around a peak to be separated are removed using a tool function of a peak analyzer of an Origin program which is one of application softwares, a Gaussian function is applied to separate the peak into two, and then the area of the XRD peak described above may be calculated, but the present disclosure is not limited thereto.

In a specific example, a ratio ($L_1/L_2$) between a full width at half maximum of the first peak (FWHM ($L_1$)) and a full width at half maximum of the second peak (FWHM ($L_2$)) in the X-ray diffraction pattern may be 1 to 20, specifically 3 to 18, more specifically 6 to 15, and still more specifically 6.5 to 13.

As another specific example, an intensity ratio ($I_1/I_2$) between a maximum intensity of the first peak ($I_1$) and the maximum intensity of the second peak ($I_2$) may be 0.05 to 1.25, specifically 0.05 to 1.05, and more specifically 0.08 to 0.75. Herein, the first peak may be derived from an amorphous silicon oxide, and the second peak may be derived from crystalline silicon. As such, since the anode material of a secondary battery including the amorphous silicon oxide may act as a buffer against volume expansion during secondary battery charging, its capacity retention rate may be excellent.

As an example, the anode material for a secondary battery may have composition uniformity satisfying the following Equation 3:

$$[\text{Equation 3}]$$

$$B/A \leq 0.65$$

wherein A and B are an average value (A) obtained by averaging contents of a doping element (wt%) measured at 100 random points, based on a cross section across the center of the anode material, and a standard deviation (B) thereof.

Specifically, A and B may be an average content (wt%, A) of a doping element calculated from 100 random points in a line profile of the doping element across the center of the cross section of the anode material, and the standard deviation (B) thereof, and more specifically, B/A of Equation 3 may satisfy 0.65 or less, 0.60 or less, 0.55 or less, 0.50 or less, 0.40 or less, or 0.30 or less and 0.2 or more.

In Equation 3, B/A is a parameter showing the composition uniformity of the anode material based on the doping element (D), and the anode material may show uniform electrochemical properties by the excellent composition uniformity of B/A satisfying the range described above.

In the anode material for a secondary battery satisfying the composition uniformity described above, the matrix may include one or more doping elements (D) selected from the group consisting of alkali metals, alkaline earth metals, and post transition metals, silicon (Si), and oxygen (O), based on an element component, and the matrix may include a silicon oxide and a composite oxide of a doping element and silicon, based on a compound component. Thus, the composition uniformity of the doping element defined by Equation 3 may correspond to the composition uniformity of the composite oxide, but is not interpreted as being necessarily limited thereto.

Herein, the analysis of the content or the line profile of the doping elements may be performed experimentally using an electron probe micro analyzer (EPMA), an energy dispersive X-ray spectroscopy (EDS) provided in a transmission electron microscope or a scanning electron microscope, or the like, but is not limited thereto.

In addition, in an exemplary embodiment, the anode material including a plurality of anode material particles may have the composition uniformity between particles according to the following Equation 2:

$$[\text{Equation 2}]$$

$$1.3 \leq UF(D)$$

wherein UF(D) is a value obtained by dividing an average doping element composition between anode material particles by a standard deviation of a doping element composition, based on wt% composition. Herein, the number of plural anode material particles may be 10 to 500, substantially 50 to 300, and more substantially 100 to 200.

Specifically, in Equation 2, UF(D) may satisfy 1.3 or more, 1.5 or more, 2 or more, 2.5 or more, 3 or more, or 5 or more, and may be substantially 8 or less. The UF(D) described above is a parameter showing composition uniformity between anode material particles in the anode material including a plurality of anode material particles, and since the UF(D) of Equation 2 satisfies the range described above, the anode material including a plurality of anode material particles has excellent composition uniformity, and thus, even when a plurality of anode material particles are included, the electrochemical properties of the anode material may be shown to be more uniform.

In a specific example, the anode material may include one or more doping elements selected from the group consisting of silicon, oxygen, alkali metals, alkaline earth metals, and post transition metals, based on an element component.

Silicon may include a silicon component in an elemental silicon state and a silicon component in an oxide state, and the silicon component in an oxide state may include an oxide state of silicon alone, a composite oxide state of silicon and a doping element, or both of them.

The doping element may include a doping element component in an oxide state, and the doping element in an oxide state may include an oxide state of a doping element alone, a composite oxide state of silicon and a doping element, or both of them.

The anode material may include a silicon oxide, a composite oxide of a doping element and silicon, or mixtures thereof, based on the compound component, and elemental silicon (Si) may be also included therewith.

The silicon oxide may be $SiO_x$ wherein x includes a real number of 0.1 to 2, and the composite oxide may be $D_lSi_mO_n$ wherein D is a doping element, l is a real number of 1 to 6, and m is a real number of 0.5 to 2, and n is a real number satisfying charge neutrality depending on the oxidation number of each of D and Si, l, and m, and specifically a real number of 1 to 6.

As an example, when D is Mg, the composite oxide may include one or more oxides selected from $MgSiO_3$ and $Mg_2SiO_4$, and the like, but in the present disclosure, D and the composite oxide are not necessarily limited to an oxide between Mg and Mg-Si.

The anode material based on a microstructure may include a dispersed phase including a matrix including a silicon oxide; a composite oxide of one or more doping elements selected from the group consisting of alkali metals and alkaline earth metals, and silicon; or mixtures thereof, and silicon nanoparticles. The dispersed phase may be positioned in the state of being uniformly dispersed and embedded in the matrix.

In a specific example, the silicon nanoparticles may be crystalline, amorphous, or a composite phase in which crystalline and amorphous silicon nanoparticles are mixed, and substantially, may be crystalline.

In a specific example, the matrix may be crystalline, amorphous, or a composite phase in which crystalline and amorphous matrices are mixed. Specifically, the matrix may be crystalline or a composite phase in which crystalline and amorphous are mixed. Specifically, the matrix may include a silicon oxide which is amorphous, crystalline, or a mixture of amorphous and crystalline silicon oxide, and a crystalline composite oxide.

In a specific example, the silicon nanoparticles may have an average diameter in the order of $10^0$ nm to $10^1$ nm, specifically 1 to 50 nm, 2 to 40 nm, 2 to 35 nm, 2 nm to 30 nm, 2 nm to 20 nm, or 2 nm to 15 nm, but is not limited thereto.

In a specific example, the doping element may be one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Thus, the composite oxide may be an oxide of silicon with one or more elements selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

The doping element may be one or more elements selected from alkali metal and alkaline earth metal groups, specifically, lithium (Li), sodium (Na), potassium (K), rubidium (Rb), cesium (Cs), beryllium (Be), magnesium (Mg), calcium (Ca), strontium (Sr), and barium (Ba), more favorably, one or more elements selected from alkaline earth metals, specifically, magnesium (Mg), calcium (Ca), strontium (Sr), and barium (Ba), and still more favorably, magnesium, so as to be favorable for forming a coherent interface with the silicon nanoparticles.

As described above, the doping element may be included in the anode material in a composite oxide form with silicon and/or an oxide form of the doping element, and may be included in the anode material mainly in the composite oxide form. Specifically, when the matrix includes the doping element in the composite oxide form with silicon, the composite oxide may include a crystalline form, and more substantially, the composite oxide may be crystalline. Thus, the matrix may include a crystalline composite oxide.

In a specific example, the silicon oxide included in the matrix may be $SiO_x$ wherein x may satisfy a real number of 0.1 to 2, more specifically a real number of 0.5 to 2, and include a first silicon oxide and a second silicon oxide having different x's from each other. As a substantial example, the silicon oxide included in the matrix may include a first silicon oxide of $SiO_{x1}$ (x1 is a real number of 1.8 to 2) and a second silicon oxide of $SiO_{x2}$ (x2 is a real number of 0.8 to 1.2). The silicon oxide included in the matrix may be crystalline, amorphous, or a composite phase of crystalline and amorphous silicon oxide, and substantially may be amorphous.

In a specific example, the anode material may include 15 to 50 wt% of the nanoparticulate silicon and a balance of matrix.

In a specific example, the matrix of the anode material may include both the silicon oxide and the composite oxide, and when the part by weight of the composite oxide based on 100 parts by weight of the silicon oxide is A and the concentration of the doping element based on wt% in the anode material is B, the matrix may satisfy A/B of 2 to 50, 2 to 40, 2 to 30, or 2 to 20.

In a specific example, the anode material may be in a particle form. The particulate anode material may have a particle size usually required in the use of a secondary battery, and as an example, may have an average diameter in the order of $10^0$ um to $10^1$ um, specifically, an average diameter at a level of 1 um to 50 $\mu$m.

As a specific example, the anode material may be a particle form having an average diameter based on volume (D50) of 1 to 50 um, specifically 1 to 30 um, more specifically 1 to 20 $\mu$m, and still more specifically 2 to 10 $\mu$m.

In a specific example, the anode material may further include a coating layer containing carbon, specifically, a surface coating layer coated on the surface of the anode material. The electrochemical properties of the anode material may be improved by the surface coating layer, which is thus preferred. The thickness of the coating layer may be 2 to 30 nm, but is not necessarily limited thereto.

In a specific example, the anode material may have an alloying ratio of (more than) 3.5 mol to 3.75 mol of lithium, specifically 3.6 to 3.75 mol of lithium per 1 mol of silicon in the electrochemical alloying with lithium (lithiation). The high alloying ratio as such is very favorable for a high capacity. In addition, in a specific example, the anode material may have high initial charge/discharge efficiency and capacity retention rate properties.

The present disclosure includes an anode including the anode material described above. The anode may be an anode of a secondary battery, specifically, a lithium secondary battery. The anode may include a current collector; and an anode active material layer which is disposed on at least one surface of the current collector and includes the anode material described above, and the anode active material layer may further include a binder and a conductive material which are commonly used in the anode material and the anode of a secondary battery anode, if necessary.

The present disclosure includes a secondary battery including the anode described above. Specifically, the present disclosure includes a lithium secondary battery including the anode described above. The lithium secondary battery may include a cathode which includes a cathode current collector and a cathode active material layer disposed on at least one surface of the cathode current collector; the anode described above; a separator interposed between the cathode and the anode; and an electrolyte conducting a lithium ion. The cathode current collector, the anode current collector, the cathode active material or composition of the cathode active material layer, the solvent, the electrolyte salt, or the electrolyte salt concentration of the separator and the electrolyte, and the like may be a material or a composition commonly adopted in the lithium secondary battery.

Hereinafter, the anode material for a secondary battery according to an exemplary embodiment of the present disclosure will be described in more detail by the following examples. However, the following examples are only a reference for describing the present disclosure in detail, and the present disclosure is not limited thereto and may be implemented in various forms.

In addition, unless otherwise defined, all technical terms and scientific terms have the same meanings as those commonly understood by a person skilled in the art to which the present disclosure pertains. The terms used herein are only for effectively describing a certain exemplary embodiment, and are not intended to limit the present disclosure.

(Example 1)

Si, $SiO_2$, and MgO raw materials were put into a powder mixer at a mole ratio of 6 (Si): 4.68 ($SiO_2$): 1.32 (MgO), respectively, and then homogeneously mixed to produce a mixed raw material, and the mixed raw material was pelletized using a mold.

26 kg of the pelletized mixed raw material was added to a crucible in a vacuum chamber at 0.1 torr or less, heated to 1,400°C to be vaporized, and then condensed in a collecting plate at 400°C to obtain a magnesium-doped silicon oxide.

The thus-obtained magnesium-doped silicon oxide was first heat-treated at 650°C for 1 hour, and then second heat-treated at 850°C for 24 hours to produce an anode material for a secondary battery in a bulk form.

At this time, the first heat treatment and the second heat treatment were performed under an argon (Ar) atmosphere.

The produced bulk-type anode material for a secondary battery was mechanically crushed to produce a particulate anode material, and a hydrocarbon gas was used to coat the particulate anode material with 5 wt% of carbon by a CVD process at 850°C to produce carbon-coated anode material powder.

(Example 2)

The process was performed in the same manner as in Example 1, except that each raw material was mixed at a mole ratio of 6 (Si): 4.2 ($SiO_2$): 1.74 (MgO).

(Example 3)

The process was performed in the same manner as in Example 1, except that each raw material was mixed at a mole ratio of 6 (Si) : 3.9 ($SiO_2$): 2.1 (MgO).

(Example 4)

The process was performed in the same manner as in Example 1, except that each raw material was mixed at a mole ratio of 6 (Si) : 3.66 ($SiO_2$): 2.34 (MgO).

(Example 5)

The process was performed in the same manner as in Example 1, except that each raw material was mixed at a mole ratio of 6 (Si) : 4.5 ($SiO_2$): 1.5 (MgO), the first heat treatment was not performed, and only the second heat treatment was performed.

(Comparative Example 1)

24 kg of a mixed raw material in which Si and $SiO_2$ were mixed at a mole ratio of 1:1 was put into Crucible A and 2 kg of metal Mg lump was put into Crucible B, the Crucible A was heated to 1,500°C and Crucible B was heated to 900°C, respectively to perform vaporization, and condensation was performed in a collection plate at 900°C to obtain a magnesium-doped silicon oxide.

The thus-obtained magnesium-doped silicon oxide (bulk type anode material for a secondary battery was mechanically crushed to produce a particulate anode material, and a hydrocarbon gas was used to coat the particulate anode material with 5 wt% of carbon by a CVD process at 850°C to produce carbon-coated anode material powder.

(Comparative Example 2)

The process was performed in the same manner as in Comparative Example 1, except that 5 kg of metal Mg lump was used as a raw material.

(Experimental Example 1) Doping element content deviation

An average content (wt%) of a doping element calculated by measuring 100 random points in the line profile across the center of the cross section by electron disperse spectroscopy (EDS), based on the cross section across the center of the magnesium-doped silicon oxide before crushing (Comparative Example 1) or the bulk-type anode material for a secondary battery obtained by a heat treatment (Example 1) was calculated as A, and the standard deviation of the content was calculated as B. As a result of a composition analysis, B/A of the anode material sample produced in Example 1 was 0.23, and B/A of Comparative Example 1 was 0.73.

Additionally, after crushing the anode material of Example 1, 150 anode material particles were sampled, and then the composition uniformity of the doping element included between the anode material particles was analyzed. At this time, UF (D) which is a value obtained by dividing an average doping element composition (wt%) between anode material particles by the standard deviation of the doping element composition was confirmed to be 6.7.

(Experimental Example 2) X-ray diffraction (XRD) analysis

The structure of the anode material after crushing was confirmed by X-ray diffraction (XRD, Rigaku D/MAX-2500/PC, 40 kV, 15 mA, 4° min$^{-1}$, Cu-K$\alpha$ radiation, $\lambda$ = 0.15406 nm) analysis.

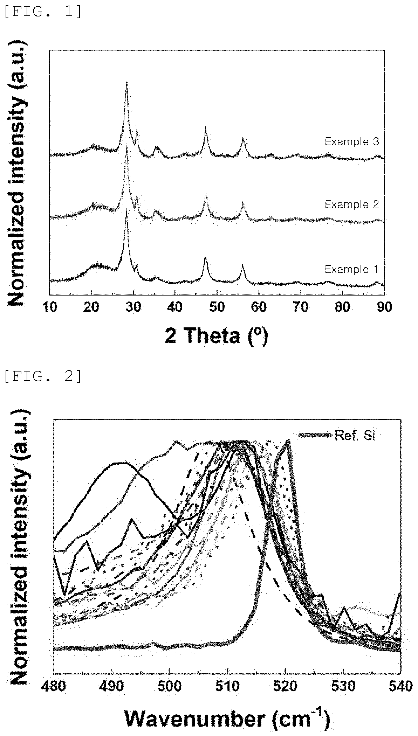

FIG. 1 is a drawing illustrating XRD patterns of Examples 1 to 3, and as seen in the drawing, it was confirmed that the peak of crystalline silicon (111) was observed at a position of about 28° in all of Examples 1 to 3, and the peaks in which the diffraction angle 2$\theta$ of Examples 1 to 3 was positioned in a range of 10° to 27.4° were broad peaks resulting from an amorphous silicon oxide.

Thus, since Examples 1 to 3 including the amorphous silicon oxide may act as a buffer against volume expansion during secondary battery charging, they may be favorable in terms of the capacity retention rate of a secondary battery.

Furthermore, upon comparison of the ratio ($A_1/A_2$) between an area of the first peak ($A_1$) in which the diffraction angle 2$\theta$ was positioned at a range of 10° to 27.4° and an area of the second peak ($A_2$) in which the diffraction angle 2$\theta$ was positioned at a range of 28$\pm$0.5°, in the X-ray diffraction pattern, Examples 1 to 3 were confirmed to be within a range of 0.8 to 6.

Additionally, upon comparison of the intensity ratio ($I_1/I_2$) between the maximum intensity of the first peak ($I_1$) in which the diffraction angle 2$\theta$ was positioned at a range of 10° to 27.4° and the maximum intensity of the second peak ($I_2$) in which the diffraction angle 2$\theta$ was positioned at a range of 28$\pm$0.5°, in the X-ray diffraction pattern, it was confirmed that Examples 1 to 3 were within a range of 0.1 to 1.25, and as a result of comparison and analysis of the ratio ($L_1/L_2$) between FWHM of the first peak ($L_1$) and FWHM of the second peak ($L_2$), it was confirmed that Examples 1 to 3 were within a range of 6 to 12.

(Experimental Example 3) Raman analysis

The Raman spectroscopic analysis of the anode material was performed under the analysis conditions as described below in 20 random positions, based on the Raman signal of silicon, by $\mu$-Raman (equipment name: XperRam C, NANOBASE, Korea) analysis of the anode material after crushing, the results are summarized in the following Table 1, and the Raman signal corresponding to tensile stress among the Raman signals of the anode material powder according to Example 1, which was measured in 20 random positions, is shown in FIG. 2.

Analysis conditions: excitation laser wavelength: 532 nm, laser power: 0.5 mW, resolution of spectrometer: 1 cm$^{-1}$, powdery anode material: 1 g, detector exposure time: 15 s.

At this time, when WN(ref)/WN(Si) was more than 1, as compared with WN(Si) which is the central wave number of the Raman peak of silicon included in the anode material powder measured based on Wn(ref) which is the central wave number (520.4 cm$^{-1}$) of the Raman peak of monocrystalline silicon, it means that silicon included in the anode material powder had residual tensile stress, and when WN(ref)/WN(Si) was less than 1, it means that silicon had residual compressive stress.

The number of residual tensile stresses (T) : the number of residual compressive stress (C) of silicon included in the anode material powder was compared, and a difference between a next maximum value and a next minimum value (difference in residual tensile stress shift) obtained by selecting only the case of tensile stress among entire residual stress and excluding a maximum value and a minimum value from the shift defined by the formula WN(Si)-WN(ref) was compared and analyzed.

(Table 1)

|  | T:C ratio | Difference in residual tensile stress shift (cm$^{-1}$) |
| --- | --- | --- |
| Example 1 | 19:1 | 9.3 |
| Example 2 | 19:1 | 10.5 |
| Example 3 | 17:3 | 11.2 |
| Example 4 | 16:4 | 11.8 |
| Example 5 | 15:5 | 14.3 |
| Comparative Example 1 | 13:7 | 18.2 |
| Comparative Example 2 | 12:8 | 19.1 |

As shown in Table 1, in Examples 1 to 5, it was confirmed that a ratio (C/T) between the number of residual compressive stresses (C) and the number of residual tensile stresses (T) satisfied 0.5 or less and the number of residual tensile stresses was more than the number of residual compressive stresses, and it was observed that the difference in residual tensile stress shift was significantly decreased as compared with Comparative Examples 1 and 2, so that the uniformity of residual tensile stress was excellent.

(Experimental Example 4) Battery production and battery performance evaluation

A mixture in which an anode active material in which each of the produced anode material powders was mixed with graphite (D50: 20 um) at a weight ratio of 8:92, styrene-butadiene rubber (SBR), a conductive material (Super C65), and carboxymethyl cellulose (CMC) were mixed at a weight ratio of 96:1:1:2 was added to distilled water to produce an anode slurry.

Subsequently, the produced anode slurry was coated on a copper current collector having a thickness of 10 um with a loading amount of 8mAh/$cm^2$, roll-pressed, and then dried in a vacuum oven at 120°C for 10 hours to produce an anode including an anode active material layer having a thickness of 50 $\mu$m.

The produced anode and a metal lithium foil (diameter: 16 mm, thickness: 0.2 mm) as a counter electrode were used to fill an electrolyte solution between separators to produce a CR2032 coin type half battery, and at this time, the electrolyte solution was obtained by dissolving 1 M $LiPF_6$ in a solvent in which ethylene carbonate (EC) and ethyl methyl carbonate (EMC) were mixed at a volume ratio of 1:1 and adding 1 wt% of vinylene carbonate (VC) and 10 wt% of fluoroethylene carbonate (FEC) as an additive.

Subsequently, the produced battery was charged (lithiated) to 0.005 V at a constant current of 0.1 C, charged at a constant voltage of 0.005 V until it reached 0.005 C, and discharged (de-lithiated) to 1.5 C at a constant current of 0.1 C, thereby performing a formation process.

After performing a formation process, a charge and discharge cycle in which the battery was charged (lithiated) to 0.005 V at a constant current of 0.5 C, charged at a constant voltage of 0.005 V until it reached 0.005 C, and then discharged (de-lithiated) to 1.5 V at a constant current of 0.5 C was performed 50 times to evaluate battery performance, and the results are summarized in the following Table 2.

(Table 2)

|  | Initial reversible efficiency (%) | Capacity retention rate (%) | Anode expansion rate (%) after 50 cycles |
|---|---|---|---|
| Example 1 | 80.4 | 87.1 | 44.5 |
| Example 2 | 82.6 | 84.3 | 44.2 |
| Example 3 | 84.1 | 84.1 | 51.0 |
| Example 4 | 85.5 | 83.9 | 52.2 |
| Example 5 | 81.4 | 82.0 | 54.1 |
| Comparative Example 1 | 81.1 | 81.5 | 55.6 |
| Comparative Example 2 | 85.2 | 79.8 | 58.2 |

In Table 2, the initial reversible efficiency is initial efficiency based on charge and discharge in the formation process, and the capacity retention rate and the anode expansion rate shows cycle characteristics measured by performing the charge and discharge cycles 50 times after the formation process.

At this time, the anode expansion rate was calculated using the following equation, after performing 50 charge/discharge cycles and then disassembling the battery in a fully charged state to SOC (stage of charge) 100% to obtain an anode, which was sufficiently washed with dimethyl carbonate (DMC) and dried.

Expansion rate = (thickness of anode active material layer after charging - thickness of anode active material layer before charging) / (thickness of anode active material layer before charging) x 100

Herein, the thickness of the anode active material layer before charging was measured by excluding the thickness of a copper current collector after measuring the thickness of the dried anode before battery assembly, and the thickness of the anode active material layer after charging was measured by excluding the thickness of the copper current collector after measuring the thickness of the anode obtained by disassembling the battery in a state of SOC 100% after 50 cycles.

In addition, though not shown in the drawing, it was confirmed that a lithium insertion peak corresponding to a $Li_{3.75}Si$ reaction was present in a dQ/dV graph of a half battery equipped with the anode including the anode material produced according to Examples 1 to 4, and thus, it is shown that lithiation occurred at an alloying ratio of 3.75 mol of lithium per 1 mol of silicon, during lithiation of the anode material produced according to Examples 1 to 4.

Additionally, as a result of measuring the particle size distribution of the anode material powder which was crushed and coated with carbon, the anode material powder particles was confirmed to have a particle size of an average diameter (D50) by volume of $5.1\mu m$, as a result of analysis using high resolution transmission electron microscope (HR-TEM), the average diameter of the crystalline silicon nanoparticles was confirmed to be about 7.1 nm, and as a result of selected area diffraction pattern (SADP) analysis, it was confirmed that the matrix included crystalline magnesium silicate and the silicon nanoparticles formed a coherent interface with the crystalline magnesium silicate.

Hereinabove, although the present disclosure has been described by specific matters, limited exemplary embodiments, and drawings, they have been provided only for assisting the entire understanding of the present disclosure, and the present disclosure is not limited to the exemplary embodiments, and various modifications and changes may be made by those skilled in the art to which the present disclosure pertains from the description.

Therefore, the spirit of the present disclosure should not be limited to the above-described exemplary embodiments, and the following claims as well as all modifications equal or equivalent to the claims are intended to fall within the scope and spirit of the disclosure.

**Claims**

1. An anode material for a secondary battery comprising: a matrix including a silicon oxide, a composite oxide of one or more doping elements selected from the group consisting of alkali metals, alkaline earth metals, and post-transition metals, and silicon, or mixtures thereof; and silicon nanoparticles which are dispersed and embedded in the matrix,

   wherein a ratio ($A_1/A_2$) between an area of a first peak ($A_1$) and an area of a second peak ($A_2$) is 0.8 to 6, a diffraction angle $2\theta$ being positioned in a range of $10°$ to $27.4°$ in the first peak and being positioned in a range of $28\pm0.5°$ in the second peak, in an X-ray diffraction pattern using a CuK$\alpha$ ray, and
   the number of residual tensile stresses is more than the number of residual compressive stresses, which are defined based on a central wave number of a Raman peak of bulk monocrystalline silicon, when the anode material is analyzed by Raman spectroscopy in 20 random positions, and a difference between a next maximum value and a next minimum value is 15 cm$^{-1}$ or less, the next maximum value and the next minimum value being obtained by selecting only the case of tensile stress in a shift defined in the following Equation 1 and excluding a maximum value and a minimum value:

   $$[\text{Equation 1}]$$

   $$\text{Shift} = \text{WN(Si)} - \text{WN(ref)}$$

   wherein WN(ref) is a central wave number of a Raman peak of the bulk monocrystalline silicon, and WN(Si) is a central wave number of a Raman peak of nanoparticulate silicon included in the anode material.

2. The anode material for a secondary battery of claim 1, wherein the difference between the next maximum value and the next minimum value is 11 cm$^{-1}$ or less.

3. The anode material for a secondary battery of claim 1, wherein a ratio (C/T) between the number of the residual compressive stresses (C) and the number of the residual tensile stresses (T) is 0.5 or less.

4. The anode material for a secondary battery of claim 1, wherein a ratio ($L_1/L_2$) between a full width at half maximum of the first peak (FWHM ($L_1$)) and a full width at half maximum of the second peak (FWHM ($L_2$) ) in the X-ray diffraction pattern is 6 to 15.

5. The anode material for a secondary battery of claim 1, wherein an intensity ratio ($I_1/I_2$) between a maximum intensity of the first peak ($I_1$) and a maximum intensity of the second peak ($I_2$) is 0.05 to 1.25.

6. The anode material for a secondary battery of claim 1, wherein the first peak is derived from an amorphous silicon oxide, and the second peak is derived from crystalline silicon.

7. The anode material for a secondary battery of claim 1, wherein the FWHM of the Raman peak of the nanoparticulate silicon included in the anode material is larger than the FWHM of the Raman peak of the bulk monocrystalline silicon.

8. The anode material for a secondary battery of claim 7, wherein the FWHM of the Raman peak of the nanoparticulate silicon included in the anode material is 4 to 20 cm$^{-1}$.

9. The anode material for a secondary battery of claim 1, wherein the anode material includes a plurality of anode material particles, and has composition uniformity between particles according to the following Equation 2:

[Equation 2]

$$1.3 \leq UF(D)$$

wherein UF(D) is a value obtained by dividing an average doping element composition between anode material particles by a standard deviation of a doping element composition, based on wt% composition.

10. The anode material for a secondary battery of claim 1, wherein the silicon nanoparticles have an average diameter of 2 to 30 nm.

11. The anode material for a secondary battery of claim 1, wherein the doping element is one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

12. The anode material for a secondary battery of claim 1, wherein the anode material may be in a particle form having an average diameter (D50) by volume of 1 to 50 um.

13. The anode material for a secondary battery of claim 1, wherein the anode material further includes a coating layer containing carbon.

14. A secondary battery comprising the anode material for a secondary battery of any one of claims 1 to 13.

[FIG. 1]

[FIG. 2]

<div align="center">

**INTERNATIONAL SEARCH REPORT**

</div>

| International application No. |
|---|
| **PCT/KR2022/020634** |

| A. CLASSIFICATION OF SUBJECT MATTER |
|---|
| **H01M 4/36**(2006.01)i; **H01M 4/38**(2006.01)i; **H01M 4/48**(2010.01)i; **H01M 10/052**(2010.01)i; **H01M 4/02**(2006.01)i |
| According to International Patent Classification (IPC) or to both national classification and IPC |

| B. FIELDS SEARCHED |
|---|
| Minimum documentation searched (classification system followed by classification symbols) |
| H01M 4/36(2006.01); C01B 32/05(2017.01); C01B 32/15(2017.01); H01M 10/0525(2010.01); H01M 4/38(2006.01); H01M 4/485(2010.01); H01M 4/587(2010.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 음극재(anode active material), 실리콘(silicon), 도핑(doping), 금속(metal), X선 회절(X-ray diffraction), 라만 분광(Raman spectroscopy), 탄소 코팅(carbon coating) |

| C. | DOCUMENTS CONSIDERED TO BE RELEVANT | |
|---|---|---|
| Category* | Citation of document, with indication, where appropriate, of the relevant passages | Relevant to claim No. |
| X | KR 10-2019-0065148 A (LG CHEM, LTD.) 11 June 2019 (2019-06-11)<br>See paragraphs [0024], [0025], [0027]-[0035] and [0068]. | 1-14 |
| A | JP 2011-222151 A (SHIN ETSU CHEM. CO., LTD.) 04 November 2011 (2011-11-04)<br>See claims 1-3. | 1-14 |
| A | KR 10-2019-0116012 A (DAE JOO ELECTRONIC MATERIALS CO., LTD.) 14 October 2019 (2019-10-14)<br>See claims 1-12, 20 and 21. | 1-14 |
| A | KR 10-2018-0092532 A (DRB HOLDING CO., LTD.) 20 August 2018 (2018-08-20)<br>See claims 1-12. | 1-14 |
| A | KR 10-2018-0010534 A (SAMSUNG SDI CO., LTD.) 31 January 2018 (2018-01-31)<br>See claims 1-5 and 11. | 1-14 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 March 2023** | **21 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

Information on patent family members

International application No.

**PCT/KR2022/020634**

| Patent document cited in search report | | | Publication date (day/month/year) | Patent family member(s) | | | Publication date (day/month/year) |
|---|---|---|---|---|---|---|---|
| KR | 10-2019-0065148 | A | 11 June 2019 | CN | 110915033 | A | 24 March 2020 |
| | | | | EP | 3675249 | A1 | 01 July 2020 |
| | | | | KR | 10-2312408 | B1 | 13 October 2021 |
| | | | | US | 11575123 | B2 | 07 February 2023 |
| | | | | US | 2020-0235383 | A1 | 23 July 2020 |
| | | | | WO | 2019-107990 | A1 | 06 June 2019 |
| JP | 2011-222151 | A | 04 November 2011 | CN | 102214824 | A | 12 October 2011 |
| | | | | EP | 2372816 | A1 | 05 October 2011 |
| | | | | JP | 5411780 | B2 | 12 February 2014 |
| | | | | KR | 10-1783047 | B1 | 28 September 2017 |
| | | | | KR | 10-2011-0112215 | A | 12 October 2011 |
| | | | | TW | 201212352 | A | 16 March 2012 |
| | | | | TW | I508355 | B | 11 November 2015 |
| | | | | US | 2011-0244333 | A1 | 06 October 2011 |
| | | | | US | 8753774 | B2 | 17 June 2014 |
| KR | 10-2019-0116012 | A | 14 October 2019 | | None | | |
| KR | 10-2018-0092532 | A | 20 August 2018 | | None | | |
| KR | 10-2018-0010534 | A | 31 January 2018 | CN | 107644983 | A | 30 January 2018 |
| | | | | KR | 10-2270155 | B1 | 28 June 2021 |
| | | | | US | 2018-0026257 | A1 | 25 January 2018 |

Form PCT/ISA/210 (patent family annex) (July 2022)

**EP 4 451 375 A1**

**REFERENCES CITED IN THE DESCRIPTION**

**Patent documents cited in the description**

- KR 1020200065514
- KR 1020150045336